# EUROPEAN PATENT SPECIFICATION

(11) **EP 3 855 560 B1**
(45) Date of publication and mention of the grant of the patent: **19.10.2022**
(21) Application number: 19914713.3
(22) Date of filing: 03.12.2019
(51) Int. Cl.: H01M 50/20, H01M 50/103, H01M 50/50, H01M 50/531, H01M 50/538, H01M 50/502, H01M 50/507

(54) **BATTERY MODULE AND DEVICE USING THE SAME**
BATTERIEMODUL UND GERÄT, DAS DIESES MODUL VERWENDET
MODULE DE BATTERIE ET DISPOSITIF L'UTILISANT

(43) Date of publication of application: 28.07.2021
(73) Proprietor: Contemporary Amperex Technology Co., Limited, Jiaocheng District Ningde City Fujian 352100 (CN)
(72) Inventor: YOU, Shubing, Ningde City Fujian 352100 (CN); YAO, Jihua, Ningde City Fujian 352100 (CN); ZHANG, Haidong, Ningde City Fujian 352100 (CN); CAO, Gen, Ningde City Fujian 352100 (CN)
(74) Representative: Vossius & Partner Patentanwälte Rechtsanwälte mbB
(86) International application number: PCT/CN2019/122711
(87) International publication number: WO 2021/108986

(56) References cited:
- EP-A1- 3 624 220
- EP-A1- 3 734 709
- CN-A- 108 767 178
- CN-A- 111 081 961
- CN-U- 208 062 147
- CN-U- 209 071 468
- CN-U- 209 418 623
- CN-U- 209 526 152
- US-A1- 2019 198 845
- US-A1- 2019 259 996

## Description

### TECHNICAL FIELD

The present application relates to the technical field of batteries, and in particular, to a battery module, a battery pack, a device, and a method for manufacturing a battery module.

### BACKGROUND

With the development of science and technology and the transformation of the world's energy structure, sustainable energy sources are gradually replacing traditional fossil fuels and becoming mainstream energy sources. For example, electric vehicles are gradually replacing traditional fuel vehicles. One of the core components in electric vehicles is the battery module. The battery module is used to provide electric power for electric vehicles. In the prior art, the total positive electrode and the total negative electrode of a battery module are usually disposed at opposite ends of the battery module, so that the total positive electrode and the total negative electrode are not disposed on the same side. In this way, when multiple battery modules are connected to each other using a harness, there is a problem that the connected harness is complicated, and large installation space is required.

US2019/259996 A1 relates to a cell contacting system for an electrochemical device which comprises a plurality of cell groups that each comprise one or a plurality of electrochemical cells. EP3624220 A1 relates to a battery module, a busbar and a busbar assembly thereof. The busbar comprises a first connecting portion, a second connecting portion and a first main portion.

### SUMMARY

The present application is to solve the technical problem that the total positive electrode and the total negative electrode of the battery module are not arranged on the same side in the prior art, when multiple battery modules are connected to each other using a harness, the connected harness is complicated and large installation space is required.

In one aspect, an embodiment of the present application proposes a battery module including: a battery unit including a first total output electrode and a second total output electrode of opposite polarities, the battery unit includes two or more battery assemblies arranged side by side, and two adjacent battery assemblies are connected in series with each other, each of the battery assemblies includes at least one secondary battery, the two pole posts of respective secondary batteries are arranged to form two columns of pole post groups, and there is an accommodation gap extending in the arrangement direction of the secondary batteries between the two columns of pole post groups; a first output pole piece including a first connection portion, an intermediate connection portion and a first output portion connected in sequence, the first connection portion is connected to the first total output electrode; the intermediate connection portion is connected to a side of the first connection portion close to the accommodation gap; a second output pole piece including a second connection portion and the second output portion, the second total output electrode is positioned on a side of the first total output electrode close to the second output portion, and the second connection portion is connected to the second total output electrode; the first output portion and the second output portion are disposed on the same side of the battery unit; the intermediate connection portion includes a first extension section, a second extension section and a third extension section successively distributed along the arrangement direction, and the first extension section and the third extension section intersect the second extension section respectively, the first extension section and the third extension section are disposed to stager with each other, the first connection portion is connected with the first extension section, the second extension section extends away from the second output pole piece to avoid the position of the second output pole piece, and the first output portion is connected to the third extension section.

According to an aspect of the embodiment of the present application, the intermediate connection portion includes two or more tensile buffer structures, and the two or more tensile buffer structures are arranged at intervals along the arrangement direction.

According to an aspect of the embodiment of the present application, the tensile buffer structures are arc-shaped.

According to an aspect of the embodiment of the present application, the secondary battery includes an explosion-proof valve, the explosion-proof valve is disposed between the two pole posts and corresponding to the accommodation gap, the intermediate connection portion includes overflow hole which is disposed above the explosion-proof valve; and/or, the intermediate connection portion includes two or more mounting and fixing portions, and the intermediate connection portion is capable of being fixed to an external member through the mounting and fixing portion.

According to an aspect of the embodiment of the present application, the width direction of the intermediate connection portion intersects with the arrangement direction, the width of at least part of the third extension section is smaller than the width of the first extension section; and/or, the first extension section extends in the arrangement direction, and the angle of the extension direction of the second extension section deviating from the arrangement direction is less than 45 °.

According to an aspect of the embodiment of the present application, in the arrangement direction, the vertical distance between an edge of the first output portion away from the intermediate connection portion and an edge of the intermediate connection portion close to the first connection portion is H1, and the vertical distance between an edge of the first connection portion away from the intermediate connection portion and the edge of the intermediate connection portion close to the first connection portion is H2, wherein H1: H2≤11: 1, and/or, H1 + H2≤400mm.

According to an aspect of the embodiment of the present application, the battery module further includes a harness isolation plate, the intermediate connection portion is disposed on a side of the harness isolation plate away from the secondary battery, the harness isolation plate includes a receiving recess corresponding to the accommodation gap, the receiving recess is recessed toward the secondary battery, and at least part of the intermediate connection portion is disposed in the receiving recess.

According to an aspect of the embodiment of the present application, in a direction intersecting the arrangement direction, the first connection portion is disposed on a side of the intermediate connection portion, and the first output pole piece further includes an adapter piece connecting the first connection portion and the intermediate connection portion.

According to an aspect of the embodiment of the present application, the adapter piece includes a first section, a buffer section, and a second section successively distributed in a direction intersecting the arrangement direction, the first section is connected to the first connection portion, and the second section is connected with the intermediate connection portion. According to an aspect of the embodiment of the present application, the width of the buffer section is smaller than the first section and smaller than the second section, the buffer section is a curved structure, and there is a gap between the buffer section and the first section and between the buffer section and the second section.

According to an aspect of the embodiment of the present application, the buffer section includes a curved structure protruding toward or away from the secondary battery.

According to an aspect of the embodiment of the present application, the first connection portion includes two or more pole post connection sections and an arc-shaped buffer section connecting two adjacent pole post connection sections, and the two or more pole post connection sections are arranged along the arrangement direction. The intermediate connection portion is connected to the pole post connection section.

According to an aspect of the embodiment of the present application, the intermediate connection portion and the first output portion are separate structures, and a part of the first output portion overlaps and is connected to the intermediate connection portion so as to form a connection structure, and the thickness of the connection structure is larger than the maximum thickness of the intermediate connection portion.

According to an aspect of the embodiment of the present application, the first output pole piece is an integrally formed structure; or, the first connection portion, the intermediate connection portion, and the first output portion are separate structures.

According to an aspect of the embodiment of the present application, in the arrangement direction, the first total output electrode is positioned on one side of the battery unit, the second total output electrode is positioned on the other side of the battery unit, and the first total output electrode and the second total output electrode are positioned on the outermost side of the battery unit.

In another aspect, a battery pack is provided according to an embodiment of the present application, which includes the battery module as described above.

In another aspect, an apparatus using a battery module as a power source according to an embodiment of the present application includes the battery module as described above.

In another aspect, a method for manufacturing a battery module according to an embodiment of the present application includes: arranging two or more battery assemblies side by side to form a battery unit, the battery unit includes a first total output electrode and a second total output electrode, each of the battery assemblies includes at least one secondary battery, and two pole posts of respective secondary batteries form two columns of pole post groups respectively with an accommodation gap between the two columns of pole post groups; providing a first output pole piece including a first connection portion, an intermediate connection portion and a first output portion, connecting the first connection portion to the first total output electrode, and the intermediate connection portion is positioned on a side of the first connection portion close to the accommodation gap; providing a second output pole piece including a second connection portion and a second output portion, connecting the second connection portion to the second total output electrode, disposing the second output portion on a side of the second total output electrode away from the first total output electrode and disposing the first output portion and the second output portion on the same side of the battery unit.

### BRIEF DESCRIPTION OF THE DRAWINGS

The features, advantages, and technical effects of the exemplary embodiments of the present application will be described below with reference to the drawings.
FIG. 1 is a schematic structural diagram of a vehicle disclosed in an embodiment of the present application;
FIG. 2 is a schematic exploded structure diagram of a battery pack disclosed in an embodiment of the present application;
FIG. 3 is a schematic structural diagram of a battery module disclosed in an embodiment of the present application;
FIG. 4 is a schematic structural diagram of a battery module disclosed in another embodiment of the present application;
FIG. 5 is an exploded schematic view of a battery module disclosed in an embodiment of the present application;
FIG.6 is a schematic plan view of a battery module according to an embodiment of the present application;
FIG.7 is a schematic plan view of a first output pole piece disclosed in an embodiment of the present application;
FIG.8 is a schematic diagram of an axonometric structure of a first output pole piece disclosed in an embodiment of the present application;
FIG. 9 is an exploded structure diagram of a first output pole piece disclosed in an embodiment of the present application;
FIG. 10 is a schematic diagram of a connection structure of a first connection portion and an adapter piece disclosed in an embodiment of the present application;
FIG.11 is a schematic diagram of an axonometric structure of a first output pole piece disclosed in another embodiment of the present application;
FIG. 12 is a schematic diagram of an axonometric structure of a first output pole piece disclosed in still another embodiment of the present application;
FIG. 13 is a schematic flowchart of a method for manufacturing a battery module according to an embodiment of the present application.

In the drawings, the drawings are not drawn to actual scale.

Reference description:
1. vehicle;
10. battery pack;
20. battery module;
21. battery unit; 21a. first total output electrode; 21b. second total output electrode; 21c. battery assembly;
22. secondary battery; 22a. accommodation gap; 221. top cover; 222. pole post; 223. explosion-proof valve;
23. bus bar;
24. end plate;
25. side plate;
26. harness isolation plate; 26a. receiving recess;
30. first output pole piece;
31. first connection portion; 31a. pole post connection section; 31b. arc buffer section;
32. intermediate connection portion; 32a. first extension section; 32b. second extension section; 32c. third extension section; 321. tensile buffer structure; 322. mounting and fixing portion;
33. first output portion;
34. adapter piece; 341. first section; 342. buffer section; 342a. arc-shaped structure; 343. second section;
40. second output pole piece;
41. second connection portion; 411. connection end;
42. second output portion;
X arrangement direction;
Y width direction.

### DETAILED DESCRIPTION

The embodiments of the present application are described in further detail below with reference to the drawings and embodiments. The detailed description and drawings of the following embodiments are used to exemplarily illustrate the principle of the present application, but cannot be used to limit the scope of the application, that is, the application is not limited to the described embodiments.

In the description of this application, it should be noted that, unless otherwise stated, "multiple" means more than two; The orientation or positional relationship indicated by the terms "upper", "lower", "left", "right", "inner", "outside" and the like is only for the convenience of describing the application and simplifying the description, and does not indicate or imply that the device or element referred to must include a specific orientation, or must be configured and operated in a specific orientation. Thus these terms should not be construed to limit the present application. In addition, the terms "first", "second", "third", etc. are used for descriptive purposes only and should not be construed to indicate or imply relative importance.

The azimuth words appearing in the following description are directions shown in the drawings, and do not limit the specific structure of the present application. In the description of this application, it should also be noted that the terms "installation", "connected with", and "connect" should be understood in a broad sense unless otherwise specified and limited. For example, the terms "installation", "connected with", and "connect" can be fixed connection, removable connection or integral connection; can be directly connected or indirectly connected through an intermediate medium. For those of ordinary skill in the art, the specific meanings of the above terms in this application can be understood according to specific conditions.

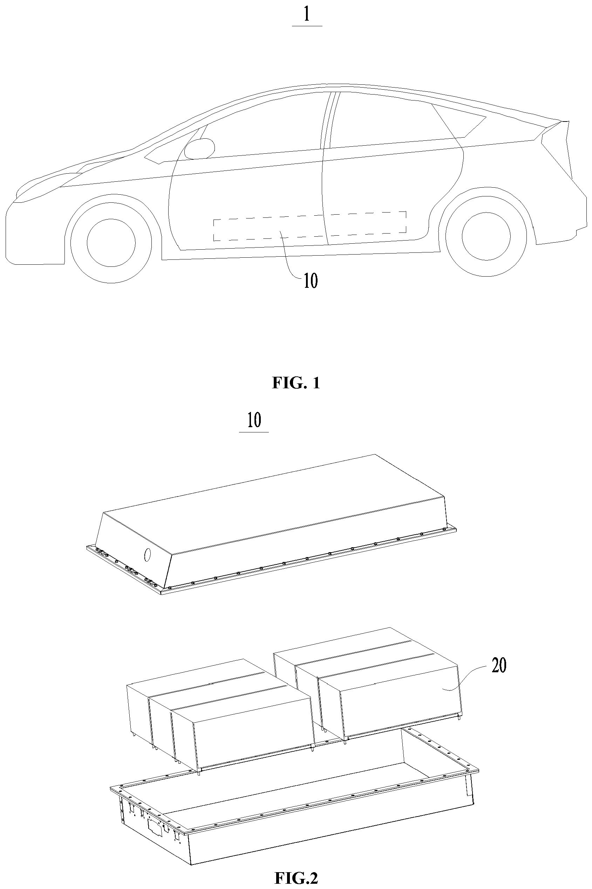

In order to better understand the present application, the embodiments of the present application are described below with reference to FIGS. 1 to 13.

An embodiment of the present application provides a device using a secondary battery as a power source. The device may be, but is not limited to, a vehicle, a ship, or an aircraft. Referring to FIG. 1, an embodiment of the present application provides a vehicle 1 including a vehicle body and a battery block. The battery block is provided on the vehicle body. The vehicle 1 may be a pure electric vehicle, a hybrid vehicle, or a range extended vehicle. The vehicle body is provided with a drive motor electrically connected to the battery block. The battery block provides power to the drive motor. The driving motor is connected to the wheels on the vehicle body through a transmission mechanism, thereby driving the vehicle to travel. Alternatively, the battery block may be horizontally disposed on the bottom of the vehicle body.

As shown in FIG. 2, the battery block may be a battery pack 10. There are various ways to dispose the battery pack 10. In some optional embodiments, the battery pack 10 includes a box and a battery module 20 disposed in the box. The number of the battery modules 20 is one or more. One or more battery modules 20 are arranged in the box. There are no restrictions on the type of the box. The box may be a frame-shaped box, a disc-shaped box, or a cassette-shaped box. Optionally, the box may include a lower box for receiving the battery module 20 and an upper box that is closed with the lower box. After the upper box and the lower box are closed, a receiving portion for receiving the battery module 20 is formed. Understandably, the battery block may also be the battery module 20, that is, the battery module 20 is directly disposed on the vehicle body.

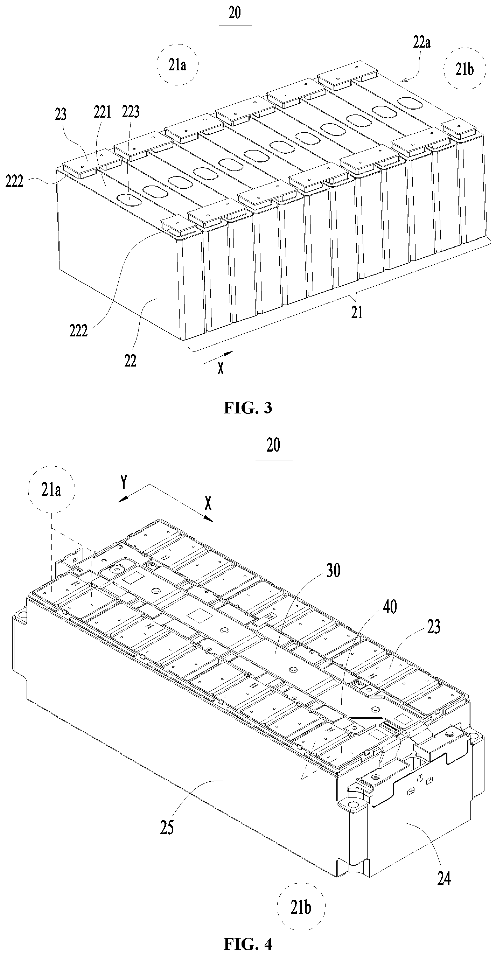

Referring to FIG. 3, the battery module 20 includes a plurality of secondary batteries 22. There are various ways to arrange the battery module 20. In one embodiment, the battery module 20 includes a receiving portion and a plurality of secondary batteries 22 positioned in the receiving portion. The plurality of secondary batteries 22 are arranged side by side in the receiving portion. There are various ways to dispose the receiving portion. For example, the receiving portion includes a housing and a cover plate disposed on the housing; or the receiving portion includes side plates and end plates which are successively enclosed and connected; or the receiving portion includes oppositely disposed end plates and a hoop surrounding the end plate and the secondary battery 22.

The secondary battery 22 in the embodiment of the present application includes a case, an electrode assembly disposed in the case, and a top cover assembly that is hermetically connected to the case.

The case of the embodiment of the present application includes a square structure or other shapes. The case includes an internal space that houses the electrode assembly and the electrolyte, and an opening that communicates with the internal space. The case may be made of a material such as aluminum, aluminum alloy, or plastic.

The top cover assembly according to the embodiment of the present application includes a top cover 221, a pole post 222, and an explosion-proof valve 223. The explosion-proof valve 223 is disposed on the top cover plate 221.

Referring to FIG. 3, the battery module 20 includes a battery unit 21 including a first total output electrode 21a and a second total output electrode 21b. The battery unit 21 includes a plurality of battery assemblies 21c connected in series. Each of the battery assemblies 21c includes one secondary battery 22. Two adjacent battery packs 21 c are connected in series to each other through a bus bar 23. Each secondary battery 22 includes two pole posts 222 that are drawn from the same side. The two pole posts 222 are spaced apart along the width direction of the battery unit 21. After the battery assemblies 21c are arranged side by side along the arrangement direction X, the two pole posts 222 of each secondary battery 22 are arranged to form two columns of pole groups, and there is a accommodation gap 22a extending between the two columns of pole groups in the arrangement direction X. The battery unit 21 includes a first total output electrode 21a and a second total output electrode 21b of opposite polarities. In the arrangement direction X, the battery unit 21 includes two opposite sides. The first total output electrode 21 a is positioned on one side of the battery cell 21, and the second total output electrode 21 b is positioned on the other side of the battery cell 21. The first total output electrode 21a and the second total output electrode 21b are both positioned at the outermost side of the battery unit 21. One of the first total output electrode 21a and the second total output electrode 21b serves as a total positive electrode, and the other serves as a total negative electrode. Optionally, the positions where the first total output electrode 21a and the second total output electrode 21b are provided are not limited to the outermost positions shown in the Figure, and the first total output electrode 21a may be provided at the most outer position shown in FIG. 3. Outside, and the second total output electrode 21b is near the center of the battery unit 21, or the second total output electrode 21b is positioned at the outermost side shown in the figure, and the first total output electrode 21a is near the center of the battery unit 21. The number of secondary batteries 22 included in each of the battery assemblies 21c is not limited to one and two as shown in FIG. 4, and may include three or more secondary batteries 22.

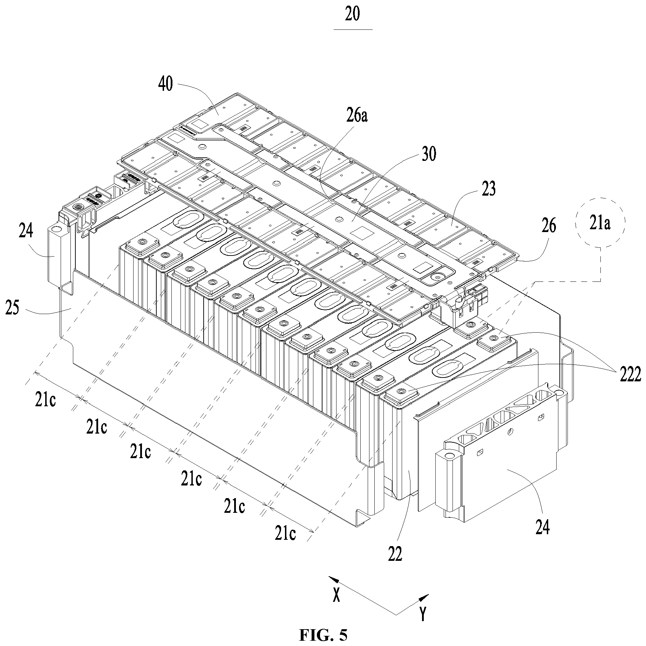

Referring to FIGS. 4 and 5, each of the battery assemblies 21c includes two secondary batteries 22 arranged in parallel. Two adjacent battery assemblies 21c are connected in series to each other through a bus bar 23. The battery module 20 further includes a first output pole piece 30 and a second output pole piece 40. One of the first output pole piece 30 and the second output pole piece 40 is output as a positive electrode, and the other is output as a negative electrode. The first output pole piece 30 is connected to the first total output electrode 21a, and both include the same polarity. The second output pole piece 40 is connected to the second total output electrode 21b, and both include the same polarity

The first output pole piece 30 includes a first connection portion 31, an intermediate connection portion 32, and a first output portion 33 connected in this order. The first output pole piece 30 is connected to the first total output electrode 21a through a first connection portion 31. The intermediate connection portion 32 is connected to a side of the first connection portion 31 near the accommodation gap 22a. The intermediate connection portion 32 is provided corresponding to the position of the accommodation gap 22a. At least part of the intermediate connection portion 32 is positioned within the accommodation gap 22a. In one example, the intermediate connection portion 32 includes a predetermined width and length. The width direction of the battery unit 21 is the same as the width direction Y of the intermediate connection portion 32. The arrangement direction X of the secondary batteries 22 is the same as the longitudinal direction of the intermediate connection portion 32. The intermediate connection portion 32 includes two end portions that are opposed to each other in the length direction thereof. The first connection portion 31 is connected to one end portion of the intermediate connection portion 32, and the first output portion 33 is connected to the other end portion of the intermediate connection portion 32. The first connection portion 31 is connected to one end portion of the intermediate connection portion 32, and the first output portion 33 is connected to the other end portion of the intermediate connection portion 32. The first connection portion 31 is provided on one side of the intermediate connection portion 32 in the width direction Y of the intermediate connection portion 32. The first total output electrode 21a and the intermediate connection portion 32 are disposed at intervals in the width direction Y.

The second output pole piece 40 includes a second connection portion 41 and a second output portion 42. The second output pole piece 40 is connected to the second total output electrode 21b through the second connection portion 41. The second output section 42 is positioned outside the second total output electrode 21b. The second total output electrode 21b is positioned on a side of the first total output electrode 21a close to the second output portion 42, that is, in the arrangement direction X. The second total output electrode 21b is positioned between the first total output electrode 21a and the second output portion 42.. The first output portion 33 and the second output portion 42 are disposed on the same side of the battery unit 21. Two adjacent battery modules 20 may be connected in series or in parallel with each other through the respective first output portion 33 and second output portion 42.

The battery module 20 in the embodiment of the present application includes a battery unit 21, a first output pole piece 30 and a second output pole piece 40. The first output pole piece 30 is connected to the first total output electrode 21a of the battery unit 21, and the second output pole piece 40 is connected to the second total output electrode 21b of the battery unit 21. The first output portion 33 of the first output pole piece 30 is connected to the first total output electrode 21a through the intermediate connection portion 32 and the first connection portion 31, so that the first output portion 33 of the second output pole piece 30 and the second output portion 42 of the output pole piece 40 are disposed on the same side of the battery unit 21, so that the two electrodes of the battery module 20 of opposite polarities can be output on the same side. In this way, when two battery modules 20 are connected in series or in parallel, a connection harness can be arranged on one side of the battery module 20, thereby reducing the arrangement complexity and space occupation rate of the connection harness, which is beneficial to improving the overall compactness of the battery module 20 and reduce the overall space occupation rate of the battery module 20 and increasing the energy density of the battery pack. In one embodiment, a predetermined safety clearance is maintained between the intermediate connection portion 32 and each pole post 222 and between the intermediate connection portion 32 and the top cover plate 221, thus reducing the possibility of short circuit caused by breakdown or contact between the intermediate connection portion 32 and each pole post 222 and between the intermediate connection portion 32 and the top cover plate 221. In addition, it is not necessary to additionally provide an insulating component between the intermediate connection portion 32 and the pole post 222 or between the intermediate connection portion 32 and the top cover plate 221, which is beneficial to reducing the number of components used.

In one embodiment, referring to FIG. 4, the battery module 20 includes an end plate 24 and a side plate 25 connected to each other. Two end plates 24 and two side plates 25 are alternately disposed along the circumferential direction of the battery unit 21 to form a receiving portion, thereby restraining each secondary battery 22. In the arrangement direction X, the end plate 24 and the secondary battery 22 are arranged side by side. Each of the first output portion 33 and the second output portion 42 is connected to one of the two end plates 24 through an insulating member. In an example, as shown in FIG. 4, the first output portion 33, the second output portion 42, and the insulating member are each provided with a threaded hole for electrically connecting the first output portion 33 and the second output portion 42 with corresponding external connection harness by screw.

In one embodiment, referring to FIG. 5, the battery module 20 further includes a harness isolation plate 26. The harness isolation plate 26 is provided above the secondary battery 22. The intermediate connection portion 32 is provided on a side of the harness isolation plate 26 away from the secondary battery 22. The harness isolation plate 26 includes a receiving recess 26a provided corresponding to the accommodation gap 22a. The receiving recess 26a is recessed toward the secondary battery 22. The receiving recess 26a includes a bottom wall that supports the intermediate connection portion 32. At least part of the intermediate connection portion 32 is disposed in the receiving recess 26a, so that on the one hand, the harness isolation plate 26 can limit the intermediate connection portion 32 and reduce the possibility of the gap between the intermediate connection portion 32 and each pole post 222 and between the intermediate connection portion 32 and the top cover 221 being smaller than a predetermined safety clearance or the possibility of contact therebetween caused by the position of the intermediate connection portion 32 being displaced, thereby reducing the possibility of short circuit caused by breakdown or contact between the intermediate connection portion 32 and each pole post 222 or between the intermediate connection portion 32 and the top cover 221; on the other hand, the harness isolation plate 26 can further insulate and isolate the intermediate connection portion 32 from each pole post 222, and the intermediate connection portion 32 from the top cover plate 221, which is beneficial to improving the stability of the intermediate connection portion 32 and each pole post 222 as well as the intermediate connection part 32 and the top cover plate 221 maintaining the insulation state. The bus bar 23 is disposed on a side of the harness isolation plate 26 away from the secondary battery 22. The bus bar 23 and the harness isolation plate 26 are detachably connected. The harness isolation plate 26 is provided with a receiving frame for receiving the bus bar 23. The pole post 222 is inserted into the center hole of the receiving frame and is electrically connected to the bus bar 23. There is an isolation boss between the receiving frame and the receiving recess 26a to separate the bus bar 23 from the intermediate connection portion 32, and reduce the possibility of short circuit caused by breakdown or contact between the bus bar 23 and the intermediate connection portion 32. The harness isolation plate 26 is provided with two rows of receiving frames, and the receiving recess 26a are provided between the two rows of receiving frames in the width direction Y. Optionally, the material of the harness isolation plate 26 is plastic or rubber.

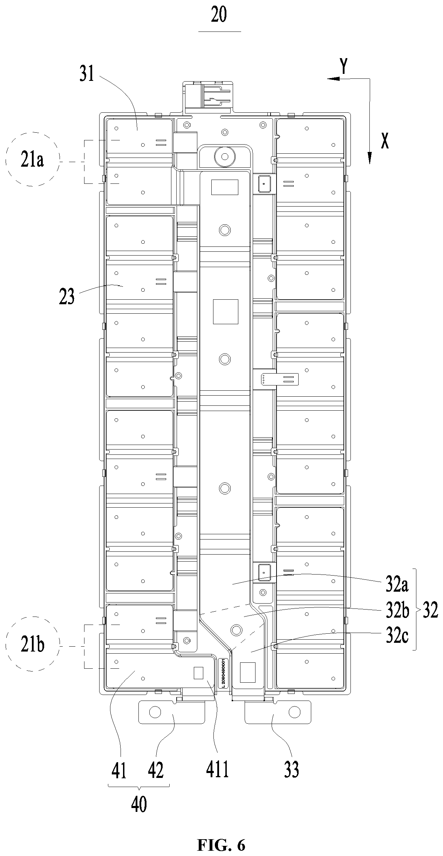

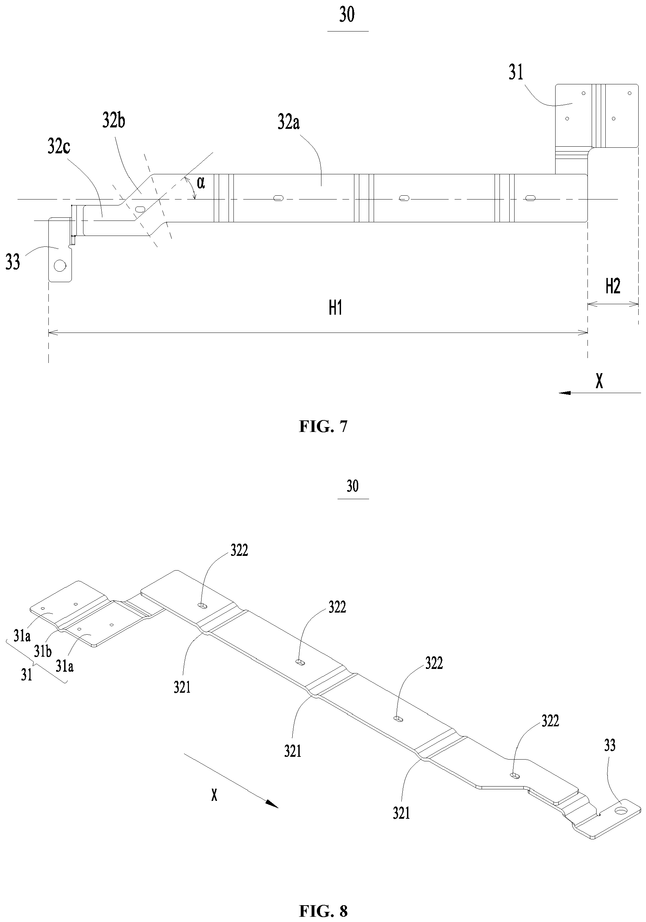

In one embodiment, referring to FIG. 6, the second output portion 42 is connected to a side of the second connection portion 41 close to the accommodation gap 22a. The second connection portion 41 and the second output portion 42 are separate structures. The second connection portion 41 includes a connection end 411 extending to the accommodation gap 22a, and the second output portion 42 is connected to the connection end 411. The intermediate connection portion 32 includes a first extension section 32a, a second extension section 32b, and a third extension section 32c that are successively distributed along the arrangement direction X. The first extension section 32a and the third extension section 32c intersect with the second extension section 32b, respectively. The first extension section 32a and the third extension section 32c are disposed to stagger with each other. The first connection portion 31 is connected to the first extension 32a. The first output portion 33 is connected to the third extension 32c. In the width direction Y, a part of the first output portion 33 extends beyond the edge of the third extension section 32c. The second extension section 32 b extends away from the second output pole piece 40 to avoid the position of the second output pole piece 40. The second extension section 32b and the third extension section 32c together form an avoiding space, so that the intermediate connection portion 32 and the second connection portion 41 do not interfere with each other in the position and maintain a predetermined safety clearance. In one example, referring to FIG. 7, the width direction Y and the arrangement direction X of the intermediate connection portion 32 intersect. The width of at least part of the third extension section 32c is smaller than the width of the first extension section 32a. In the case where the size of the accommodation gap 22a is kept fixed, the third extension section 32c can avoid the second connection portion 41 on one side and the bus bar 23 on the other side, and thus it can maintain safety clearance between the third extension section 32c and the second connection portion 41 as well as the third extension section 32c and the bus bar 23, and fully utilize the installation space of the accommodation gap 22a. In one example, referring to FIG. 7, the width direction Y and the arrangement direction X of the intermediate connection portion 32 intersect. The width of at least part of the second extension section 32b is smaller than the width of the first extension section 32a. The width of at least part of the third extension section 32c is smaller than the width of the second extension section 32b. In one example, the first extension section 32a extends in the arrangement direction X. The angle α of the extension direction of the second extension section 32b deviating from the arrangement direction X is less than 45 °, so that the angle α between the extension direction of the first extension section 32a and the extension direction of the second extension section 32b is less than 45 °. The first connection portion 31 of the first output pole piece 30 is connected and fixed to the first total output electrode 21a, and the first output portion 33 is connected and fixed to the end plate 24. During the use of the battery module 20, the secondary battery 22 expands in the arrangement direction X, so that a tensile stress in the arrangement direction X is applied to the intermediate connection portion 32. Since the angle of the extension direction of the second extension section 32b deviating from the arrangement direction X is less than 45 °, when the first extension section 32a and the second extension section 32b carry tensile stress, the stress concentration at the connection between the first extension section 32a and the second extension section 32b can be effectively reduced, thereby reducing the possibility of the first extension section 32a and the second extension section 32b breaking at the connection between the first extension section 32a and the second extension section 32b. In one example, referring to FIG. 7, the third extension section 32c extends along the arrangement direction X. The angle α of the extension direction of the second extension section 32b deviating from the arrangement direction X is less than 45 °, so that the acute angle between the extension direction of the third extension section 32c and the extension direction of the second extension section 32b is less than 45 °. When the second extension section 32b and the third extension section 32c carry tensile stress, the stress concentration at the connection between the second extension section 32b and the third extension section 32c can be effectively reduced, thereby reducing the possibility of the second extension section 32b and the third extension section 32c breaking at the connection between the second extension section 32b and the third extension section 32c.

In one embodiment, referring to FIG. 7, along the arrangement direction X, the vertical distance between the edge of the first output portion 33 away from the intermediate connection portion 32 and the edge of the intermediate connection portion 32 near the first connection portion 31 is H1. In the arrangement direction X, a part of the first connection portion 31 extends beyond the intermediate connection portion 32. The vertical distance between the edge of the first connection portion 31 away from the intermediate connection portion 32 and the edge of the intermediate connection portion 32 near the first connection portion 31 is H2. In one example, HI: H2≤11: 1. When HI: H2> 11: 1, the length of the intermediate connection portion 32 is too long, which causes the overcurrent capability of the first output pole piece 30 to be reduced, so that the temperature of the first output pole piece 30 is liable to be high during the battery module 20 discharges, which will further affect the sampling accuracy of the temperature sampling component. In one example, H1 + H2≤400mm. When H1 + H2> 400mm, the overall length of the first output pole piece 30 is too long and the resistance is too high, so that the amount of heat generated by the first output pole piece 30 is too large, which will also affect the sampling accuracy of the temperature sampling component.

In one embodiment, referring to FIG. 8, the intermediate connection portion 32 includes two or more tensile buffer structures 321. Two or more tensile buffer structures 321 are arranged at intervals in the arrangement direction X, and all of the tensile buffer structures 321 are positioned between two ends of the intermediate connection portion 32. When the secondary battery 22 swells and causes the intermediate connection portion 32 to carry tensile stress, the arc-shaped tensile buffer structure 321 will reduce its bending degree under the action of tensile stress, and the corresponding curvature will become smaller, thereby stretching the tensile buffer structure 321 in the arrangement direction X when the tensile buffer structure 3211 carry tensile stress, which is beneficial to reducing the tensile stress between the intermediate connection portion 32 and the first connection portion 31 and between the intermediate connection portion 32 and the first output portion 33, thereby reducing a possibility that the intermediate connection portion 32 and the first connection portion 31 or the intermediate connection portion 32 and the first output portion 33 are separated due to excessive tensile stress carried at the connection between the intermediate connection portion 32 and the first connection portion 31 and the connection between the intermediate connection portion 32 and the first output portion 33. Optionally, in the arrangement direction X, both sides of each tensile buffer structure 321 are flat sections. In one example, the tensile buffer structure 321 is arc-shaped, thereby reducing the possibility of stress concentration occurring when the tensile buffer structure itself carry tensile stress. The tensile buffer structure 321 extends in the width direction Y. The transition between the tensile buffer structure 321 and the adjacent flat section is smooth. The tensile buffer structure 321 may protrude toward or away from the secondary battery 22. Optionally, a part of the intermediate connection portion 32 may be manufactured using a stamping process to form the tensile buffer structure 321so as to ensure that the intermediate connection portion 32 is integrally formed and its rigidity is improved.

In an embodiment, as shown in FIG. 8, the first connection portion 31 includes two or more pole post connection sections 31a and an arc-shaped buffer section 31b connecting two adjacent pole post connection sections 31a. Two or more pole post connection sections 31a are provided along the arrangement direction X. The intermediate connection portion 32 may be connected to one pole post connection section 31a. The intermediate connection portion 32 may also be connected to two or more pole post connection sections 31a. The number of the pole post connection sections 31 a is the same as the number of the secondary batteries 22 provided in parallel included in the battery assemblies 21c. After two or more secondary batteries 22 are connected in parallel, the pole posts 222 in a row are connected to the corresponding pole post connection sections 31a. When the secondary battery 22 expands and causes the first connection portion 31 to carry tensile stress, the bending degree of the curved buffer section 31b will decrease, and the corresponding curvature will become smaller, so that the arc-shaped buffer section 31b will be stretched in the arrangement direction X, which is beneficial to reducing the tensile stress between two adjacent pole post connection sections 31a, thereby reducing a possibility that the pole post connection sections 31a is disconnected from the pole post 222 or the first connection portion 31 is pulled off, which is caused due to excessive tensile stress carried by the first connection portion. Since the arc-shaped buffer section 31b itself is an arc-shaped structure, the possibility of stress concentration occurring when the arc-shaped buffer section 31b itself carries the tensile stress is reduced. The arc-shaped buffer section 31b extends in the width direction Y. Smoothly transitions occurs between the arc-shaped buffer section 31b and the adjacent flat area. The arc-shaped buffer section 31b may protrude toward or away from the secondary battery 22. Optionally, a part of the first connection portion 31 may be manufactured using a stamping process to form the arc-shaped buffer section 31b, so as to ensure that the first connection portion 31 is integrally formed and its rigidity is improved.

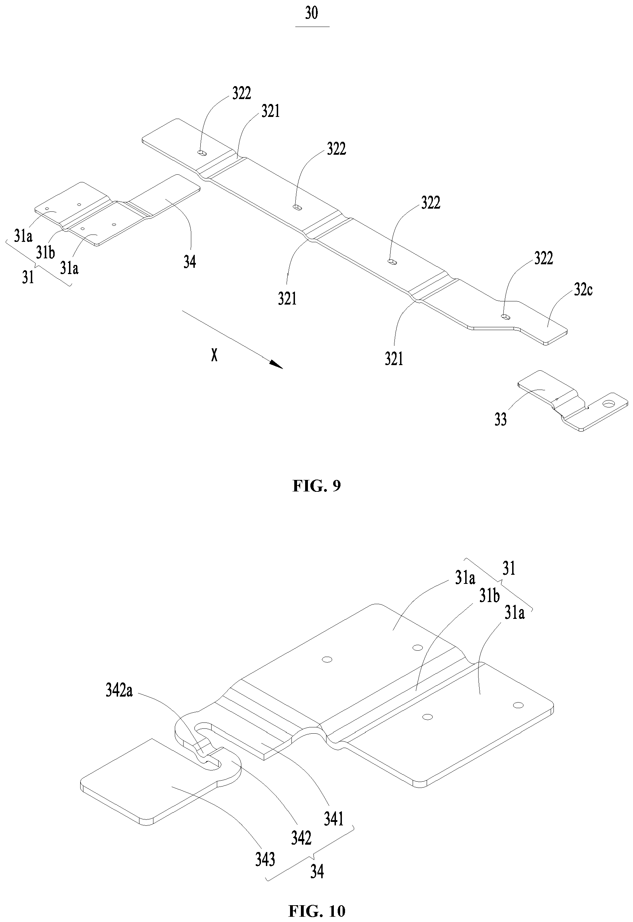

In one embodiment, referring to FIG. 9, the first connection portion 31 is disposed on one side of the intermediate connection portion 32 in a width direction Y that intersects the arrangement direction X. The first connection portion 31 is connected to the first total output electrode 21a. The first output pole piece 30 further includes an adapter piece 34 connecting the first connection portion 31 and the intermediate connection portion 32. The adapter piece 34 extends from a side of the first connection portion 31 close to the accommodation gap 22a toward the accommodation gap 22a. The first connection portion 31 is connected and fixed to the intermediate connection portion 32 through the adapter piece 34, which is beneficial to improving the connection convenience of the first connection portion 31 and the intermediate connection portion 32. In one example, the first connection portion 31 and the adapter piece 34 are integrally formed, and the adapter piece 34 is connected to the intermediate connection portion 32 by welding. The overall structure formed by the first connection portion 31 and the adapter piece 34 includes high rigidity and includes good resistance to tensile deformation. When the secondary battery 22 expands and causes the intermediate connection portion 32 to be displaced in the arrangement direction X, the intermediate connection portion 32 applies a force in the arrangement direction X to the adapter piece 34. Since the adapter piece 34 is welded to the intermediate connection portion 32, the welding portion can buffer and absorb a part of the acting force. Because the adapter piece 34 and the first connection portion 31 are an integrally formed structure, it is beneficial to reducing the amount of displacement that occurs when the adapter piece 34 carry an action force, thereby reducing the possibility of tearing of the adapter piece 34 and the first connection portion 31. In one example, the first connection portion 31 and the adapter piece 34 are formed separately, so that the first connection portion 31 and the adapter piece 34 can be separately processed and manufactured, which is beneficial to reducing processing difficulty.

In one embodiment, referring to FIG. 9, the adapter piece 34 includes a first section 341, a buffer section 342, and a second section 343 that are sequentially distributed along a width direction Y that intersects the arrangement direction X. The first section 341 is connected to the first connection section 31, and the second section 343 is connected to the intermediate connection section 32. When the adapter plate 34 carries tensile stress in the width direction Y, both the first section 341 and the second section 343 move away from each other, and the buffer section 342 can be stretched in the width direction Y to buffer and absorb the tensile stress, reducing the possibility of the adapter piece 34 being broken or torn. In one example, referring to FIG. 10, the width of the buffer section 342 is smaller than the first section 341 and smaller than the second section 343. The buffer section 342 is a curved structure. There are gaps between the buffer section 342 and the first section 341 and between the buffer section 342 and the second section 343. The buffer section 342 includes two ends. One of the two ends is connected to the first section 341 and the other end is connected to the second section 343. Optionally, the buffer section 342 includes a first arc-shaped area, a middle transition area, and a second arc-shaped area, so that the buffer section 342 is S-shaped, so that a stress concentration area is unlikely to occur when it carries an external force, and it includes good tensile resistance. The first arc-shaped area is connected to the first section 341, and the second arc-shaped area is connected to the second section 343. In one example, referring to FIG. 10, the buffer section 342 includes an arc-shaped structure 342a protruding toward the secondary battery 22. Alternatively, the arc-shaped structure 342a may also protrude away from the secondary battery 22. When the secondary battery 22 swells or vibrates during use, the first section 341 and the second section 343 may swing up and down in a vertical plane. When the first section 341 and the second section 343 swing up and down in the vertical plane, the arc-shaped structure 342a of the buffer section 342 can effectively buffer the stress that is applied to the buffer section 342 when the first section 341 or the second section 343 swings, reducing the possibility that the buffer section 342 is overloaded and thus causes itself to break. The first section 341 and the second section 343 are connected by a buffer section 342, which can buffer the tensile stress in the width direction Y and the tensile stress generated when swinging up and down through the buffer section 342 to reduce the possibility of breakage of the adapter plate 34 and as a result failure of the battery modular 20. Optionally, the buffer section 342 includes a first arc-shaped region, a middle transition region, and a second arc-shaped region, and the arc-shaped structure 342a is disposed on the middle transition region. The number of the arc-shaped structures 342a may be two or more.

In one embodiment, referring to FIG. 9, the intermediate connection portion 32 includes two or more mounting and fixing portions 322. The intermediate connection portion 32 can be mounted and fixed to an external member such as the harness isolation plate 26 or the top cover plate 221 of the secondary battery 22 through the mounting and fixing portion 322. The mounting and fixing portion 322 and the tensile buffer structure 321 are disposed at intervals along the arrangement direction X. In one example, the mounting and fixing portion 322 is a mounting and fixing hole. The rivets or screws penetrate the mounting and fixing portion 322 and are connected to the harness isolation plate 26 or the top cover plate 221. The mounting and fixing holes are strip-shaped holes extending in the arrangement direction X, so that the intermediate connection portion 32 is not restricted from moving in the arrangement direction X.

In one embodiment, referring to FIG. 8 and FIG. 9, the intermediate connection portion 32 and the first output portion 33 are separate structures. A part of the first output portion 33 is overlapped with and connected with the intermediate connection portion 32 to form a connection structure. The thickness of the connection structure is greater than the maximum thickness of the intermediate connection portion 32, so that the overcurrent capability of the first output pole piece 30 at the connection structure is enhanced, which is beneficial to reducing temperature rise. In one example, the first output portion 33 and the third extension section 32c of the intermediate connection portion 32 overlap with each other, and the width of the overlapping portion of the first output portion 33 and the third extension section 32c is equal to the width of the third extension section 32c.

In one embodiment, referring to FIG. 8 and FIG. 9, the first connection portion 31, the intermediate connection portion 32, and the first output portion 33 are separate structures from each other, that is, the three portions are independently provided. The first connection portion 31 and the intermediate connection portion 32 are connected by welding. The intermediate connection portion 32 and the first output portion 33 are connected by welding. The first connection portion 31 is used for welding with the pole post 222. Since it needs to meet the welding strength, the thickness of the first connection portion 31 is designed to be thin. Since the length of the intermediate connection portion 32 is longer than that of the first connection portion 31 and the first output portion 33, the resistance itself is large. The first output portion 33 is an output end and includes a high requirement for heat dissipation, so the thickness is thicker than the thickness of the first connection portion 31. When the materials of the first connection portion 31, the intermediate connection portion 32, and the first output portion 33 are all aluminum, the thickness of the three portions meets that the first connection portion 31 is smaller than the first output portion 33 and the first output portion 33 is less than or equal to the intermediate connection portion 32. When the material of the first connection portion 31 and the intermediate connection portion 32 is aluminum, and the material of the first output portion 33 is copper, since copper includes a high conductivity and good heat dissipation, when the thickness of the first output portion 33 itself is correspondingly reduced, the thickness of the three portions is such that the thickness of the first connection portion 31 is smaller than or equal to the first output portion 33, and the first output portion 33 is smaller than the intermediate connection portion 32.

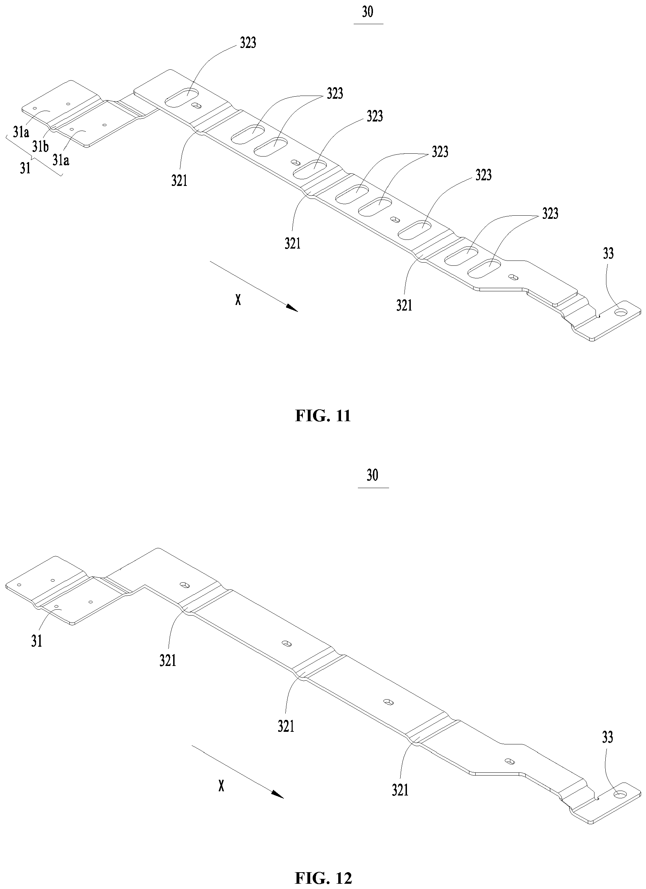

In one embodiment, the explosion-proof valve 223 of the secondary battery 22 is disposed between the two pole posts 222 and corresponding to the accommodation gap 22a. Referring to FIG. 11, the intermediate connection portion 32 includes an overflow hole 323. The overflow hole 323 is provided above the explosion-proof valve 223. When the explosion of the explosion-proof valve 223 is caused by the excessive pressure inside the secondary battery 22, the airflow or material sprayed from the explosion-proof valve 223 can be quickly diffused through the overflow hole 323, thereby increasing the speed of airflow or material diffusion and reducing the possibility that the airflow or substance ejected from the explosion-proof valve 223 will be blocked by the intermediate connections 32 and the safety of the secondary battery 22 is affected. Optionally, the number and positions of the overflow holes 323 and the number and positions of the explosion-proof valves 223 are provided in a one-to-one correspondence.

In one embodiment, referring to FIG. 12, the first output pole piece 30 is an integrally formed structure. The first output pole piece 30 can be formed by performing a stamping operation on the blank, which is beneficial to reducing processing steps.

The battery module 20 according to the embodiment of the present application includes battery assemblies 21c arranged in series with each other. The battery assemblies 21c arranged in series with each other form a battery unit 21. Two adjacent battery assemblies 21c are connected in series through one bus bar 23. The battery unit 21 includes a first total output electrode 21a and a second total output electrode 21b. The battery module 20 further includes a first output pole piece 30 connected to the first total output electrode 21a and a second output pole piece 40 connected to the second total output electrode 21b. The first output portion 33 of the first output pole piece 30 and the second output portion 42 of the second output pole piece 40 are disposed on the same side of the battery unit 21. Since the first output portion 33 and the second output portion 42 are disposed on the same side of the battery unit 21, when two battery modules 20 are connected to each other using a connection harness, the wiring and arrangement of the connection harness are relatively simple, occupying small space, and at the same time the connection process of connection the harness to the first output portion 33 or the connection harness and the second output portion 42 is easy to operate, reducing the difficulty of connection. The intermediate connection portion 32 of the first output pole piece 30 is disposed above the battery unit 21 and is disposed corresponding to the accommodation gap 22a, so that the size of the entire battery module 20 in the width direction Y can be reduced, and the installation space occupation rate in the width direction Y of the first output pole piece 30 can be reduced, which is beneficial to increasing the energy density of the battery module 20.

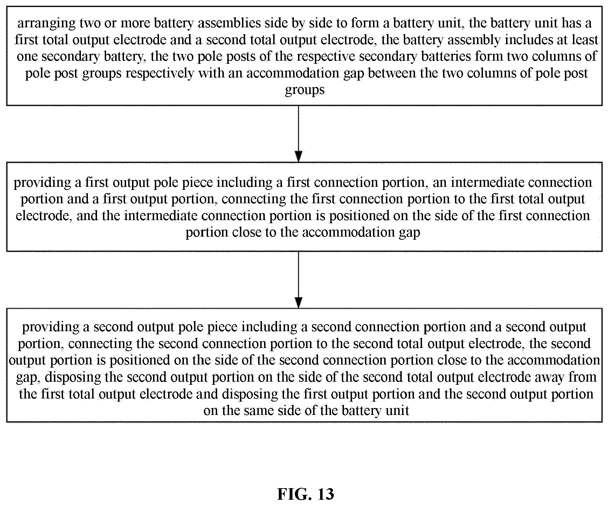

Referring to FIG. 13, an embodiment of the present application further provides a method for manufacturing a battery module 20, which includes:
Arranging two or more battery assemblies 21c side by side to form a battery unit 21, the battery unit 21 includes a first total output electrode 21a and a second total output electrode 21b, and each of the battery assemblies 21c includes at least one secondary battery 22. The two pole posts 222 of the respective secondary batteries 22 form two columns of pole post groups respectively, with an accommodation gap 22a between the two columns of pole post groups; Providing a first output pole piece 30 including a first connection portion 31, an intermediate connection portion 32, and a first output portion 33, connecting the first connection portion 31 to the first total output electrode 21a, and the intermediate connection portion 32 is positioned on a side of the first connection portion 31 close to the accommodation gap 22a;

Providing a second output pole piece 40 including a second connection portion 41 and a second output portion 42, connecting the second connection portion 41 to the second total output electrode 21b, disposing the second output portion 42 on a side of the second total output electrode 21b away from the first total output electrode 21a, and disposing the first output portion 33 and the second output portion 42 on the same side of the battery unit 21.

The battery module 20 manufactured by using the above-mentioned manufacturing method of the battery module 20 can realize that the first output portion 33 of the first output pole piece 30 and the second output portion 42 of the second output pole piece 40 are disposed on the same side of the battery unit 21. Since the first output portion 33 and the second output portion 42 are disposed on the same side of the battery unit 21, when two battery modules 20 are connected to each other using a connection harness, the wiring and arrangement of the connection harness are relatively simple, occupying small space, and the connection process of connection harness and the first output portion 33 or the connection harness and the second output portion 42 at the same time is easy to operate, reducing the difficulty of connection. The intermediate connection portion 32 of the first output pole piece 30 is disposed above the battery unit 21 and correspondingly to the accommodation gap 22 a, so that the size of the entire battery module 20 in the width direction Y can be reduced, and the installation space occupation rate in the width direction Y of the first output pole piece 30 can be reduced, which is also beneficial to increasing the energy density of the battery module 20.

Although the present application has been described with reference to the preferred embodiments, various modifications may be made thereto and components thereof may be replaced with equivalents without departing from the scope of the present application. In particular, as long as there is no structural conflict, the technical features mentioned in the embodiments can be combined in any manner. This application is not limited to the specific embodiments disclosed herein, but includes all technical solutions that fall within the content of the claims.

## Claims

1. A battery module (20), comprising:
a battery unit (21) comprising a first total output electrode (21a) and a second total output electrode (21b) of opposite polarities, wherein the battery unit (21) comprises two or more battery assemblies (21c) arranged side by side, and two adjacent battery assemblies (21c) are connected in series with each other, each of the battery assemblies (21c) comprises at least one secondary battery (22), and two pole posts (222) of respective secondary batteries (22) are arranged to form two columns of pole post groups, and there is an accommodation gap (22a) extending between the two columns of pole post groups in the arrangement direction (X) of the secondary batteries (22);
the first output pole piece (30) comprising a first connection portion (31), an intermediate connection portion (32), and a first output portion (33) connected in sequence, wherein the first connection portion (31) is connected to the first total output electrode (21a), and the intermediate connection portion (32) is connected to a portion of the first connection portion (31) on a side close to the accommodation gap (22a);
a second output pole piece (40) comprising a second connection portion (41) and a second output portion (42), wherein the second total output electrode (21b) is positioned on a side of the first total output electrode (21a) close to the second output portion (42), the second connection portion (41) is connected to the second total output electrode (21b);
the first output portion (33) and the second output portion (42) are disposed on the same side of the battery unit (21),
wherein the intermediate connection portion (32) comprises a first extension section (32a), a second extension section (32b), and a third extension section (32c) successively distributed along the arrangement direction (X), and the first extension section (32a) and the third extension section (32c) are disposed to intersect with the second extension section (32b) respectively, the first extension section (32a) and the third extension section (32c) are disposed to stagger with each other, the first connection portion (31) is connected to the first extension section (32a), and the second extension section (32b) extends away from the second output pole piece (40) to avoid the position of the second output pole piece (40), and the first output portion (33) is connected to the third extension section (32c).

2. The battery module (20) according to claim 1, wherein the intermediate connection portion (32) comprises two or more tensile buffer structures (321), and the two or more tensile buffer structures (321) are spaced apart along the arrangement direction (X).

3. The battery module according to claim 2, wherein the two or more tensile buffer structures (321) are arc-shaped.

4. The battery module (20) according to any one of claims 1 to 3, wherein the secondary battery (22) comprises an explosion-proof valve (223), the explosion-proof valve (223) is disposed between the two pole posts (222) and corresponding to the accommodation gap (22a), and the intermediate connection portion (32) comprises an overflow hole (323) disposed above the explosion-proof valve (223); and/or the intermediate connection portion (32) comprises two or more mounting and fixing portions (322), and the intermediate connection portion (32) is capable of being mounted and fixed on an external component through the two or more mounting and fixing portions (322).

5. The battery module according to claim 1, wherein a width direction (Y) of the intermediate connection portion (32) intersects the arrangement direction (X), and a width of at least a portion of the third extension section (32c) is smaller than a width of the first extension section (32a); and/or, the first extension section (32a) extends along the arrangement direction (X), and the extension direction of the second extension section (32b) deviates from the arrangement direction (X) by an angle less than 45 °.

6. The battery module (20) according to any one of claims 1 to 5, wherein in the arrangement direction (X), the vertical distance between an edge of the first output portion (33) away from the intermediate connection portion (32) and an edge of the intermediate connection portion (32) close to the first connection portion (31) is H1, and the vertical distance between an edge of the first connection portion (31) away from the intermediate connection portion (32) and an edge of the intermediate connection portion (32) close to the first connection portion (31) is H2, wherein HI: H2≤ 11: 1, and/or, H1 + H2≤400mm.

7. The battery module (20) according to any one of claims 1 to 6, wherein the battery module (20) further comprises a harness isolation plate (26), and the intermediate connection portion (32) is disposed on a side of the harness isolation plate (26) away from the secondary battery (22), the harness isolation plate (26) comprises a receiving recess (26a) provided corresponding to the accommodation gap (22a), the receiving recess (26a) is recessed toward the secondary battery (22), and at least a part of the intermediate connection portion (32) is provided in the receiving recess (26a).

8. The battery module (20) according to any one of claims 1 to 7, wherein in a direction intersecting the arrangement direction (X), the first connection portion (31) is disposed on one side of the intermediate connection portion (32), and the first output pole piece (30) further comprises an adapter piece (34) for connecting the first connection portion (31) and the intermediate connection portion (32).

9. The battery module (20) according to claim 8, wherein the adapter piece (34) comprises a first section (341), a buffer section (342), and a second section (343) successively distributed in a direction intersecting the arrangement direction (X), and the first section (341) is connected with the first connection portion (31), and the second section (342) is connected with the intermediate connection portion (32).

10. The battery module according to claim 9, wherein a width of the buffer section (342) is smaller than that of the first section (341) and smaller than that of the second section (343), the buffer section (342) is a curved structure, and there are gaps between the buffer section (342) and the first section (341) and between the buffer section (342) and the second section (342).

11. The battery module according to claim 9 or 10, wherein the buffer section (342) comprises an arc-shaped structure protruding toward or away from the secondary battery (22).

12. The battery module (20) according to any one of claims 1 to 11, wherein the first connection portion (31) comprises two or more pole post connection sections (31a) and an arc-shaped buffer section (31b) for connecting two adjacent pole post connection sections (31a), the two or more pole post connection sections (31a) are arranged along the arrangement direction (X), and the intermediate connection portion (32) is connected to the pole post connection sections (31a).

13. A device using a battery module (20) as a power source, comprising the battery module (20) according to any one of claims 1 to 12.

## Patentansprüche

1. Batteriemodul (20), umfassend:
eine Batterieeinheit (21), die eine erste Gesamtausgangselektrode (21a) und eine zweite Gesamtausgangselektrode (21b) mit entgegengesetzten Polaritäten umfasst, wobei die Batterieeinheit (21) zwei oder mehrere nebeneinander angeordnete Batterieanordnungen (21c) umfasst, und zwei benachbarte Batterieanordnungen (21c) miteinander in Reihe geschaltet sind, jede der Batterieanordnungen (21c) mindestens eine Sekundärbatterie (22) umfasst, und zwei Polpfosten (222) jeweiliger Sekundärbatterien (22) dazu angeordnet sind, zwei Spalten von Polpfostengruppen zu bilden, und eine Lücke zur Aufnahme (22a) vorhanden ist, die sich zwischen den zwei Spalten von Polpfostengruppen in der Anordnungsrichtung (X) der Sekundärbatterien (22) erstreckt;
den ersten Ausgangspolschuh (30), der einen ersten Verbindungsabschnitt (31), einen Zwischenverbindungsabschnitt (32) und einen ersten Ausgangsabschnitt (33) umfasst, die in Reihe verbunden sind, wobei der erste Verbindungsabschnitt (31) mit der ersten Gesamtausgangselektrode (21a) verbunden ist, und der Zwischenverbindungsabschnitt (32) mit einem Abschnitt des ersten Verbindungsabschnitts (31) auf einer Seite nahe der Lücke zur Aufnahme (22a) verbunden ist;
einen zweiten Ausgangspolschuh (40), der einen zweiten Verbindungsabschnitt (41) und einen zweiten Ausgangsabschnitt (42) umfasst, wobei die zweite Gesamtausgangselektrode (21b) auf einer Seite der ersten Gesamtausgangselektrode (21a) nahe dem zweiten Ausgangsabschnitt (42) positioniert ist, der zweite Verbindungsabschnitt (41) mit der zweiten Gesamtausgangselektrode (21b) verbunden ist;
der erste Ausgangsabschnitt (33) und der zweite Ausgangsabschnitt (42) auf derselben Seite der Batterieeinheit (21) angeordnet sind,
wobei der Zwischenverbindungsabschnitt (32) einen ersten Verlängerungsteil (32a), einen zweiten Verlängerungsteil (32b) und einen dritten Verlängerungsteil (32c) umfasst, die nacheinander entlang der Anordnungsrichtung (X) verteilt sind, und der erste Verlängerungsteil (32a) und der dritte Verlängerungsteil (32c) so angeordnet sind, dass sie jeweils den zweiten Verlängerungsteil (32b) schneiden, der erste Verlängerungsteil (32a) und der dritte Verlängerungsteil (32c) zueinander versetzt angeordnet sind, der erste Verbindungsabschnitt (31) mit dem ersten Verlängerungsteil (32a) verbunden ist, und sich der zweite Verlängerungsteil (32b) von dem zweiten Ausgangspolschuh (40) weg erstreckt, um die Position des zweiten Ausgangspolschuhs (40) zu vermeiden, und der erste Ausgangsabschnitt (33) mit dem dritten Verlängerungsteil (32c) verbunden ist.

2. Batteriemodul (20) nach Anspruch 1, wobei der Zwischenverbindungsabschnitt (32) zwei oder mehrere Dehnungspufferstrukturen (321) umfasst und die zwei oder mehrere Dehnungspufferstrukturen (321) entlang der Anordnungsrichtung (X) beabstandet sind.

3. Batteriemodul nach Anspruch 2, wobei die zwei oder mehrere Dehnungspufferstrukturen (321) bogenförmig sind.

4. Batteriemodul (20) nach einem der Ansprüche 1 bis 3, wobei die Sekundärbatterie (22) ein explosionssicheres Ventil (223) umfasst, das explosionssichere Ventil (223) zwischen den zwei Polpfosten (222) und entsprechend der Lücke zur Aufnahme (22a) angeordnet ist, und der Zwischenverbindungsabschnitt (32) ein Überlaufloch (323) umfasst, das über dem explosionssicheren Ventil (223) angeordnet ist; und/oder der Zwischenverbindungsabschnitt (32) zwei oder mehrere Montage- und Befestigungsabschnitte (322) umfasst, und der Zwischenverbindungsabschnitt (32) durch die zwei oder mehrere Montage- und Befestigungsabschnitte (322) an einer externen Komponente montiert und befestigt werden kann.

5. Batteriemodul nach Anspruch 1, wobei eine Breitenrichtung (Y) des Zwischenverbindungsabschnitts (32) die Anordnungsrichtung (X) schneidet und eine Breite von zumindest einem Abschnitt des dritten Verlängerungsteils (32c) kleiner als eine Breite des ersten Verlängerungsteils (32a) ist; und/oder sich der erste Verlängerungsteil (32a) entlang der Anordnungsrichtung (X) erstreckt und die Verlängerungsrichtung des zweiten Verlängerungsteils (32b) von der Anordnungsrichtung (X) um einen Winkel von weniger als 45° abweicht.

6. Batteriemodul (20) nach einem der Ansprüche 1 bis 5, wobei in der Anordnungsrichtung (X) der vertikale Abstand zwischen einer Kante des ersten Ausgangsabschnitts (33) weg von dem Zwischenverbindungsabschnitt (32) und einer Kante des Zwischenverbindungsabschnitts (32) nahe dem ersten Verbindungsabschnitt (31) H1 ist und der vertikale Abstand zwischen einer Kante des ersten Verbindungsabschnitts (31) weg von dem Zwischenverbindungsabschnitt (32) und einer Kante des Zwischenverbindungsabschnitts (32) nahe dem ersten Verbindungsabschnitt (31) H2 ist, wobei H1: H2 ≤ 11: 1, und/oder H1 + H2≤400 mm.

7. Batteriemodul (20) nach einem der Ansprüche 1 bis 6, wobei das Batteriemodul (20) ferner eine Kabelbaum-Isolationsplatte (26) umfasst, und der Zwischenverbindungsabschnitt (32) auf einer Seite der Kabelbaum-Isolationsplatte (26) weg von der Sekundärbatterie (22) angeordnet ist, die Kabelbaum-Isolationsplatte (26) eine Aufnahmevertiefung (26a), die entsprechend der Lücke zur Aufnahme (22a) vorgesehen ist, umfasst, die Aufnahmevertiefung (26a) zur Sekundärbatterie (22) hin vertieft ist, und zumindest ein Teil des Zwischenverbindungsabschnitts (32) in der Aufnahmevertiefung (26a) vorgesehen ist.

8. Batteriemodul (20) nach einem der Ansprüche 1 bis 7, wobei in einer Richtung, die die Anordnungsrichtung (X) schneidet, der erste Verbindungsabschnitt (31) auf einer Seite des Zwischenverbindungsabschnitts (32) angeordnet ist, und der erste Ausgangspolschuh (30) ferner ein Übergangsstück (34) zum Verbinden des ersten Verbindungsabschnitts (31) und des Zwischenverbindungsabschnitts (32) umfasst.

9. Batteriemodul (20) nach Anspruch 8, wobei das Übergangsstück (34) einen ersten Teil (341), einen Pufferteil (342) und einen zweiten Teil (343) umfasst, die nacheinander in einer die Anordnungsrichtung (X) schneidenden Richtung verteilt sind, und der erste Teil (341) mit dem ersten Verbindungsabschnitt (31) verbunden ist, und der zweite Teil (342) mit dem Zwischenverbindungsabschnitt (32) verbunden ist.

10. Batteriemodul nach Anspruch 9, wobei eine Breite des Pufferteils (342) kleiner als die des ersten Teils (341) und kleiner als die des zweiten Teils (343) ist, der Pufferteil (342) eine gekrümmte Struktur ist, und Lücken zwischen dem Pufferteil (342) und dem ersten Teil (341) und zwischen dem Pufferteil (342) und dem zweiten Teil (342) vorhanden sind.

11. Batteriemodul nach Anspruch 9 oder 10, wobei der Pufferteil (342) eine bogenförmige Struktur umfasst, die zu der Sekundärbatterie (22) hin oder von ihr weg vorsteht.

12. Batteriemodul (20) nach einem der Ansprüche 1 bis 11, wobei der erste Verbindungsabschnitt (31) zwei oder mehrere Polpfosten-Verbindungsteile (31a) und einen bogenförmigen Pufferteil (31b) zum Verbinden von zwei benachbarten Polpfosten-Verbindungsteilen (31a) umfasst, die zwei oder mehreren Polpfosten-Verbindungsteile (31a) entlang der Anordnungsrichtung (X) angeordnet sind, und der Zwischenverbindungsteil (32) mit den Polpfosten-Verbindungsteilen (31a) verbunden ist.

13. Vorrichtung, die ein Batteriemodul (20) als Energiequelle verwendet, umfassend das Batteriemodul (20) nach einem der Ansprüche 1 bis 12.

## Revendications

1. Module de batterie (20) comprenant:
une unité de batterie (21) comprenant une première électrode de sortie totale (21a) et une deuxième électrode de sortie totale (21b) de polarités opposées, dans laquelle l'unité de batterie (21) comprend deux ou plusieurs composants de batterie (21c) agencés côte à côte, et deux composants de batteries adjacents (21c) sont connectés en série l'un à l'autre, chacun des composants de batteries (21c) comprend au moins une batterie secondaire (22), et deux bornes polaires (222) de batteries secondaires respectives (22) sont agencées pour former deux colonnes de groupes de bornes polaires, et un espace de logement (22a) est prévu, qui s'étend entre les deux colonnes de groupes de bornes polaires dans la direction d'agencement (X) des batteries secondaires (22) ;
une première pièce polaire de sortie (30) comprenant une première portion de connexion (31), une portion de connexion intermédiaire (32) et une première portion de sortie (33) connectées en séquence, dans lequel la première portion de connexion (31) est connectée à la première électrode de sortie totale (21a), et la portion de connexion intermédiaire (32) est connectée à une partie de la première portion de connexion (31) sur un côté proche de l'espace de logement (22a) ;
une deuxième pièce polaire de sortie (40) comprenant une deuxième portion de connexion (41) et une deuxième portion de sortie (42), dans lequel la deuxième électrode de sortie totale (21b) est positionnée sur un côté de la première électrode de sortie totale (21a) proche de la deuxième portion de sortie (42), la deuxième portion de connexion (41) est connectée à la deuxième électrode de sortie totale (21b) ;
la première portion de sortie (33) et la deuxième portion de sortie (42) sont disposées sur un même côté de l'unité de batterie (21),
dans lequel la portion de connexion intermédiaire (32) comprend une première section d'extension (32a), une deuxième section d'extension (32b) et une troisième section d'extension (32c) réparties de manière successive dans une direction d'agencement (X), et la première section d'extension (32a) et la troisième section d'extension (32c) sont disposées pour se croiser avec la deuxième section d'extension (32b) respectivement, la première section d'extension (32a) et la troisième section d'extension (32c) sont disposées pour se décaler l'une par rapport à l'autre, la première portion de connexion (31) est connectée à la première section d'extension (32a), et la deuxième section d'extension (32b) s'étend dans une direction éloignée de la deuxième pièce polaire de sortie (40) pour éviter la position de la deuxième pièce polaire de sortie (40), et la première portion de sortie (33) est connectée à la troisième section d'extension (32c).

2. Module de batterie (20) selon la revendication 1, dans lequel la portion de connexion intermédiaire (32) comprend deux ou plusieurs structures tampons de traction (321), et les deux ou plusieurs structures tampons de traction (321) sont disposées à l'intervalle dans la direction d'agencement (X).

3. Module de batterie selon la revendication 2, dans lequel les deux ou plusieurs structures tampons de traction (321) sont en forme d'arc.

4. Module de batterie (20) selon l'une quelconque des revendications 1 à 3, dans lequel la batterie secondaire (22) comprend une soupape antidéflagrante (223), la soupape antidéflagrante (223) est disposée entre les deux bornes polaires (222) et correspondant à l'espace de logement (22a), et la portion de connexion intermédiaire (32) comprend un trou de trop-plein (323) prévu au-dessus de la soupape antidéflagrante (223) ; et/ou la portion de connexion intermédiaire (32) comprend deux ou plusieurs portions de montage et de fixation (322), et la portion de connexion intermédiaire (32) peut être montée et fixée sur un composant externe à travers les deux ou plusieurs portions de montage et de fixation (322).

5. Module de batterie selon la revendication 1, dans lequel une direction de largeur (Y) de la portion de connexion intermédiaire (32) croise la direction d'agencement (X), et une largeur d'au moins une partie de la troisième section d'extension (32c) est inférieure à une largeur de la première section d'extension (32a) ; et/ou, la première section d'extension (32a) s'étend le long de la direction d'agencement (X), et la direction d'extension de la deuxième section d'extension (32b) s'écarte de la direction d'agencement (X) d'un angle inférieur à 45°.

6. Module de batterie (20) selon l'une quelconque des revendications 1 à 5, dans lequel dans la direction d'agencement (X), la distance verticale entre un bord de la première portion de sortie (33) éloigné de la portion de connexion intermédiaire (32) et un bord de la portion de connexion intermédiaire (32) proche de la première portion de connexion (31) est H1, et la distance verticale entre un bord de la première portion de connexion (31) éloigné de la portion de connexion intermédiaire (32) et un bord de la portion de connexion intermédiaire (32) proche de la première portion de connexion (31) est H2, dans lequel H1 : H2 ≤ 11: 1, et/ou, H1 + H2≤400mm.

7. Module de batterie (20) selon l'une quelconque des revendications 1 à 6, dans lequel le module de batterie (20) comprend en outre une plaque d'isolation de faisceau (26), et la portion de connexion intermédiaire (32) est disposée sur un côté de la plaque d'isolation de faisceau (26) éloignée de la batterie secondaire (22), la plaque d'isolation de faisceau (26) comprend un évidement de réception (26a) prévu en correspondance à l'espace de logement (22a), l'évidement de réception (26a) est en retrait vers la batterie secondaire (22), et au moins une partie de la portion de connexion intermédiaire (32) est reçu dans l'évidement de réception (26a).

8. Module de batterie (20) selon l'une quelconque des revendications 1 à 7, dans lequel, dans une direction coupant la direction d'agencement (X), la première portion de connexion (31) est disposée sur un côté de la portion de connexion intermédiaire (32), et la première pièce polaire de sortie (30) comprend en outre un adapteur (34) pour connecter la première portion de connexion (31) et la portion de connexion intermédiaire (32).

9. Module de batterie (20) selon la revendication 8, dans lequel l'adapteur (34) comprend une première section (341), une section tampon (342) et une deuxième section (343) réparties de manière successive dans une direction coupant la direction d'agencement (X), et la première section (341) est connectée à la première portion de connexion (31), et la deuxième section (342) est connectée à la portion de connexion intermédiaire (32).

10. Module de batterie selon la revendication 9, dans lequel une largeur de la section tampon (342) est inférieure à celle de la première section (341) et inférieure à celle de la deuxième section (343), la section tampon (342) a une structure incurvée, et des espaces sont prévus entre la section tampon (342) et la première section (341) et entre la section tampon (342) et la deuxième section (342).

11. Module de batterie selon la revendication 9 ou 10, dans lequel la section tampon (342) a une structure en forme d'arc faisant saillie vers ou à l'opposé de la batterie secondaire (22).

12. Module de batterie (20) selon l'une quelconque des revendications 1 à 11, dans lequel la première portion de connexion (31) comprend deux ou plusieurs sections de connexion de borne polaire (31a) et une section tampon en forme d'arc (31b) pour connecter deux sections de connexion de bornes polaire (31a) adjacents, les deux ou plusieurs sections de connexion de borne polaire (31a) sont agencées dans la direction d'agencement (X), et la portion de connexion intermédiaire (32) est connectée aux sections de connexion de borne polaire (31a).

13. Dispositif utilisant un module de batterie (20) comme source de puissance, comprenant le module de batterie (20) selon l'une quelconque des revendications 1 à 12.
